# EUROPÄISCHE PATENTANMELDUNG

(11) **EP 4 607 303 A1**
(43) Veröffentlichungstag der Anmeldung: **27.08.2025**
(21) Anmeldenummer: 24158562.9
(22) Anmeldetag: 20.02.2024
(51) Int. Cl.: G05B 19/418

(54) **ANZEIGE KRITISCHER TRENDKURVEN BEI DER BEDIENUNG UND BEOBACHTUNG**

(71) Anmelder: Siemens Aktiengesellschaft, 80333 München (DE)
(72) Erfinder: Lutz, Benjamin, 76327 Pfinztal (DE)
(74) Vertreter: Siemens Patent Attorneys

(57) **Zusammenfassung**

Die Erfindung betrifft ein Leitsystem (16) für eine technische Anlage, insbesondere Fertigungs- oder Prozessanlage, das dazu ausgebildet ist, eine grafische Darstellung (1) von digitalen Repräsentationen (7, 8, 9, 10, 11) einer Mehrzahl von technischen Objekten der technischen Anlage zur Bedienung und Beobachtung der technischen Anlage zu erzeugen.

Das Leitsystem (16) ist dadurch gekennzeichnet, dass es dazu ausgebildet ist, zur Laufzeit der technischen Anlage eine Anforderung von einem Operator des Leitsystems (16) entgegenzunehmen und in Reaktion auf die Anforderung automatisch eine Kritikalität derjenigen Messwerte, die den technischen Objekten zugeordnet ist, zu ermitteln und einen zeitlichen Verlauf (13) und/oder eine numerische Anzeige (14) wenigstens des Messwertes, der die höchste Kritikalität aufweist, der grafischen Darstellung (1) hinzuzufügen.

## Beschreibung

Die Erfindung betrifft ein Leitsystem für eine technische Anlage, insbesondere Fertigungs- oder Prozessanlage. Außerdem betrifft die Erfindung ein Verfahren zum Betrieb einer technischen Anlage, insbesondere Fertigungs- oder Prozessanlage.

Für die Bedienung und Beobachtung verfahrenstechnischer Anlagen werden symbolische Anlagenbilder erstellt, die die verfah-renstechnischen Zusammenhänge - insbesondere zwischen einzelnen Prozessobjekten - abstrahiert darstellen. Anlagenbilder setzen sich dabei aus statischen Symbolen (z.B. Leitungen, Rechtecke, usw.), dynamisierten Symbolen (z.B. in Abhängigkeit von Prozesswerten Leitungen mit Farbumschlag, Rechtecke mit Füllständen, usw.), Blocksymbolen (zur dynamisierten Visualisierung verfahrenstechnischer Prozessobjekte), komplexen Controls (z.B. Trendanzeigen, Meldefolgeanzeigen, usw.) und Containern, um Inhalte aus unabhängigen und eigenständige Quellen visualisieren zu können (z.B. Webcams, Anlagenbilder modulare Anlagenteile, oder Applikationen wie ein Regleroptimierer oder KPI-Berechnungen), zusammen.

Zur Navigation zwischen Anlagenbildern, visualisierten SFC-Schrittketten (SFC = Sequential Flow Chart), Prozessobjekt-Detailansichten und dergleichen in einem Operator Station Cli-ent nutzen Operatoren für das Bedienen und Beobachten Anlagenbildhierarchien, in denen die Anlagenbilder hierarchisch strukturiert und mit Gruppenalarmen dynamisiert sind. Zudem verwenden die Operatoren die sogenannte "technologische Hierarchie", in der alle Automatisierungspläne (Anlagenbilder, SFCs, CFCs...) und Objekte wie Prozessobjekte in einer Struktur gemäß der verfahrenstechnischen Anlage, vorliegen.

Der Beobachtungskontext eines Operators hängt nicht nur von dem Anlagenbild ab, das der er aktuell aufgeschlagen hat, sondern auch von den (weiteren) Anlagenbildern, Complex Controls, Containern, Faceplates, Schrittketten, Batch Rezepte, Anwenderselektionen usw., die er in zusätzlichen Bildfenstern (Bild-in-Bild) einblendet. Der Beobachtungskontext kann dabei variabel durch den Operator vorgegeben werden und richtet sich nicht nach den tatsächlich dargestellten Objekten und Dokumenten. In der Fülle des Beobachtungskontexts ist es für den Operatoren nahezu unmöglich zu ermitteln, welchen Prozesswert er besonders beobachten muss - beispielsweise, weil dieser sich nahe einer kritischen Alarmschwelle bewegt oder diese bereits durchbrochen hat. Besonders tritt dieses Problem auf, wenn Prozesswerte nicht direkt als Zahlen dargestellt werden, sondern indem sie Symbole des Anlagenbildes dynamisieren (Füllstände, Farbumschläge usw.).

Aus der EP 4 083 731 A1 ist ein Alarmmanagement für Prozessanlagen bekannt, bei welchem für eine Mehrzahl von Prozessobjekten jeweils eine automatisierte Zuordnung eines Gruppenalarmstatus erfolgt.

Der Erfindung liegt die Aufgabe zugrunde, ein Leitsystem für eine technische Anlage anzugeben, welches die Effizienz und die Flexibilität einer Bedienung und Beobachtung der technischen Anlage erhöht.

Diese Aufgabe wird gelöst durch ein Leitsystem für eine technische Anlage mit den Merkmalen des Anspruchs 1. Außerdem wird die Aufgabe gelöst durch ein Verfahren zum Betrieb einer technischen Anlage gemäß Anspruch 13. Vorteilhafte Weiterbildungen ergeben sich aus den abhängigen Ansprüchen.

Das erfindungsgemäße Leitsystem für eine technische Anlage, insbesondere Fertigungs- oder Prozessanlage, ist dazu ausgebildet, eine grafische Darstellung von digitalen Repräsentationen einer Mehrzahl von technischen Objekten der technischen Anlage zur Bedienung und Beobachtung der technischen Anlage zu erzeugen. Das Leitsystem ist dadurch gekennzeichnet, dass es dazu ausgebildet ist, zur Laufzeit der technischen Anlage eine Anforderung von einem Operator des Leitsystems entgegenzunehmen und in Reaktion auf die Anforderung automatisch eine Kritikalität derjenigen Messwerte, die den technischen Objekten zugeordnet ist, zu ermitteln und einen zeitlichen Verlauf und/oder eine numerische Anzeige wenigstens des Messwertes, der die höchste Kritikalität aufweist, der grafischen Darstellung hinzuzufügen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem Leitsystem wird im vorliegenden Kontext ein computergestütztes, technisches System verstanden, das Funktionalitäten zum Darstellen, Bedienen und Leiten der technischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Kompo-nenten umfassen, die zur Ansteuerung der Aktoren bzw. Sensoren dienen. Darüber hinaus kann das Leitsystem u.a. Mittel zur Visualisierung der verfahrenstechnischen Anlage und zu einem Engineering aufweisen. Das Leitsystem kann optional auch weitere Recheneinheiten für komplexere Regelungen und Systeme zur Da-tenspeicherung und -verarbeitung umfassen.

In an sich bekannter Weise ist das Leitsystem dazu ausgebildet, eine grafische Darstellung von digitalen Repräsentationen einer Mehrzahl von technischen Objekten der technischen Anlage zur Bedienung und Beobachtung der technischen Anlage zu erzeugen. Die visuelle Darstellung kann beispielsweise auf einem Computerbildschirm, einem Tablet oder einem Smartphone erfolgen.

Das Leitsystem ist erfindungsgemäß dazu ausgebildet, zur Laufzeit der technischen Anlage eine Anforderung von einem Operator des Leitsystems entgegenzunehmen und in Reaktion auf die Anforderung automatisch eine Kritikalität derjenigen Messwerte, die den technischen Objekten zugeordnet ist, zu ermitteln und einen zeitlichen Verlauf und/oder eine numerische Anzeige wenigstens des Messwertes, der die höchste Kritikalität aufweist, der grafischen Darstellung hinzuzufügen.

Unter einem Operator wird dabei ein menschlicher Bediener des technischen Systems verstanden. Der Operator interagiert mittels spezieller Benutzerschnittstellen mit der technischen Anlage bzw. deren Leitsystem und steuert spezielle technische Funktionen der technischen Anlage. Hierzu kann der Operator ein Bedien- und Beobachtungssystem des Leitsystems nutzen.

Bei den technischen Objekten kann es sich beispielsweise um Rohrleitungen, Tanks, Motoren, Ventile, Aktoren, Sensoren, Brenner oder Roboter handeln.

Die Anforderung des Operators nimmt das Leitsystem zur Laufzeit der technischen Anlage entgegen und passt daraufhin die grafische Darstellung an. Dabei erfolgt die Anpassung der grafischen Darstellung dahingehend, dass ein zeitliche Verlauf und/oder eine numerische Anzeige wenigstens des Messwertes, der die höchste Kritikalität aufweist, der grafischen Darstellung hinzugefügt wird.

Die grafische Darstellung ist bei vielen technischen Anlagen komplex und unübersichtlich, weshalb dem Operator der Blick auf das Wesentliche (dem Messwert mit der höchsten Kritikalität) verwehrt bleiben kann. Das erfindungsgemäße Leitsystem versetzt den Operator in die Lage, zur Laufzeit der technischen Anlage gezielt einen kritischen Messwert im Kontext der Bedienung und Beobachtung der technischen Anlage identifizieren und sich unmittelbar einen zeitlichen Verlauf des betreffenden Messwertes anzeigen zu lassen. Hierdurch kann der Operator zielgerichtet die weiteren Schritte in seiner Bedienung und Beobachtung der technischen Anlage vornehmen. Damit kann die Sicherheit und Effizienz des Betriebs der technischen Anlage signifikant verbessert werden.

Die grafische Darstellung kann eine Auflistung von Referenzen auf Anlagenbilder der technischen Anlage umfassen. Ein Anlagenbild stellt dabei die funktionellen Zusammenhänge zwischen einzelnen technischen Objekten einer mittels des Leitsystems bedienten und beobachteten technischen Anlage dar. Das Anlagenbild umfasst in der Regel statische und dynamisch änderbare Symbole oder Container, in denen beispielsweise Kamerabilder aus eigenständigen und unabhängigen Quellen dargestellt werden können. Beim Anwählen einer solchen Referenz bekommt der Operator durch das Leitsystem das betreffende Anlagenbild angezeigt.

Die grafische Darstellung kann zusätzlich oder alternativ zu der Auflistung von Referenzen auf Anlagenbild auch eines oder mehrere Anlagenbilder umfassen.

Die grafische Darstellung kann auch gemäß einem Sequential Flow Chart (SFC) aufgebaute Schrittketten umfassen. Dabei stellt das Sequential Flow Chart eine Ablaufprogrammiersprache für "Programmable Logic Controller" gemäß der Norm IEC 61131-3 dar.

Die grafische Darstellung kann auch eine Meldeanzeige sein, welche eine Meldung aus der technischen Anlage umfasst. Unter einer Meldung wird dabei ein Bericht vom Eintreten eines Ereignisses verstanden, das einen Übergang aus einem diskreten Zustand innerhalb der technischen Anlage in einen anderen diskreten Zustand darstellt.

Die Auflistung in der grafischen Darstellung kann auch virtuelle Repräsentationen von technischen Objekten der technischen Anlage umfassen, die vorzugsweise gemäß eines funktionellen Zusammenwirkens in der Auflistung gegliedert sind. In der Auflistung sind dabei beispielsweise verschiedene Sensoren und Aktoren enthalten, die innerhalb der technischen Anlage zusammenwirken, um technische Funktionalitäten bereitzustellen.

Bevorzugt umfasst die Auflistung in der grafischen Darstellung von dem Operator zuvor zur Laufzeit der technischen Anlage festgelegte Selektionen. Solche Selektionen sind beliebige Kombinationen aus virtuellen Repräsentationen, Anlagenbildern oder sonstigen Elementen einer Bedienung und Beobachtung.

Das Leitsystem kann dazu ausgebildet sein, die Anforderung des Operators durch die Anwahl eines entsprechend visuell dargebotenen Symbols durch den Operator entgegenzunehmen. Dieses kann beispielsweise ein Symbol eines Werteverlaufs darstellen, welches den Operator auf eine hierdurch initiierbare Fokussierung auf den Messwert mit der höchsten Kritikalität hinweist. Der Operator kann hierbei die Anforderung an das Leitsystem durch Anwählen des Symbols richten (Mausklick, Fingerberührung etc.).

Zusätzlich oder alternativ kann das Leitsystem auch dazu ausgebildet sein, die Anforderung des Operators durch eine Spracheingabe des Operators entgegenzunehmen. Hierbei drückt der Operator seinen Anforderungswunsch sprachlich aus. Das Leitsystem kann diesen sprachlichen Anforderungswunsch erkennen und darauffolgend weitere Aktionen initiieren.

Bevorzugt ist das Leitsystem dazu ausgebildet, die dem Messwert, der die höchste Kritikalität aufweist, zugeordnete grafische Repräsentation visuell hervorzuheben. Dies erfolgt dabei insbesondere durch eine Änderung eines Kontrastes oder einer Farbgebung, oder durch ein Hinzufügen eines Rahmens um die grafische Repräsentation, vorzugsweise eines Rahmens mit einer zeitlich wechselnden Helligkeit oder Farbe. Durch die visuelle Hervorhebung wird die Aufmerksamkeit des Operators zielgerichtet auf die grafische Repräsentation bzw. das durch diese repräsentierte technische Objekt gelenkt, zu welchem der kritische Messwert zugehörig ist.

Besonders bevorzugt ist das Leitsystem dabei dazu ausgebildet, die grafische Repräsentation für den Fall, dass diese vor der Anforderung durch den Operator von einer anderen grafischen Repräsentation überdeckt und damit für den Operator nicht sichtbar war, für den Operator sichtbar zu machen. Dadurch verliert der Operator keine kostbare Zeit, um das oder die betroffenen grafischen Repräsentationen zu identifizieren.

Im Rahmen einer bevorzugten Weiterbildung der Erfindung umfasst das Leitsystem einen Operator Station Server und einen Operator Station Client. Dabei ist der Operator Station Client dazu ausgebildet, die visuellen Darstellungen, die wie zuvor erläutert ausgebildet sein können, zu erzeugen, die Anforderung durch den Operator entgegenzunehmen und an den Operator Station Server weiterzuleiten. Der Operator Station Server ist dazu ausgebildet, die Kritikalität der Messwerte zu ermittlen und die höchste Kritikalität zu bestimmen. Weiterhin ist er dazu ausgebildet, daraufhin eine dahingehende Information an den Operator Station Client weiterzuleiten, damit der Operator Station Client die grafische Darstellung anpasst.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage zur Visualisierung an sogenannte Operator Station Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen.

Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Ein Operator der technischen Anlage kann über den Operator Station Client, welcher beispielsweise ein Tablet, ein Smartphone, ein Personal Computer oder dergleichen sein kann, zum Zwecke eines Bedienens und Beobachtens der technischen Anlage auf den Operator Station Server zugreifen.

Das Leitsystem kann dazu ausgebildet sein, die Kritikalität des Messwertes anhand einer Alarmmeldung zu ermitteln, welche das technische Objekt betrifft, zu dem der Messwert zugeordnet ist. Hierzu kann das Leitsystem auf die Alarmmeldungen zugreifen, die in der technischen Anlage angefallen sind und ihnen Informationen über ihre Kritikalität entnehmen. Das Leitsystem kann auch dazu ausgebildet sein, auf Warnmeldungen oder sonstige Meldungen zuzugreifen, um beispielsweise zu ermitteln, ob ein oder mehrere Messwerte kurz vor dem Auslösen eines Alarmes stehen.

Das Leitsystem kann auch dazu ausgebildet sein, die Kritikalität des Messwertes anhand von Eingaben zu ermitteln, die ein weiterer Operator zuvor in dem Leitsystem getätigt hat. Eine solche Eingabe kann eine von einem Operator hinsichtlich eines Messwertes manuell getätigte Bewertung hinzuziehen.

Bevorzugt ist das Leitsystem dazu ausgebildet, die Kritikalität des Messwertes anhand einer Vorhersage zu ermitteln, welche auf ein zeitnahes Über- oder Unterschreiten eines Schwellwertes des Messwertes hinweist. Hierfür können Methoden eines maschinellen Lernens zum Einsatz kommen, mit welchen der Betrieb der technischen Anlage überwacht wird und mögliche fehlerhafte Zustände prädiziert werden können.

Die zuvor formulierte Aufgabe wird zudem gelöst durch Verfahren zum Betrieb einer technischen Anlage, insbesondere Fertigungs- oder Prozessanlage, mit einem Leitsystem, welches eine grafische Darstellung von digitalen Repräsentationen einer Mehrzahl von technischen Objekten der technischen Anlage zur Bedienung und Beobachtung der technischen Anlage erzeugt, und welches zur Laufzeit der technischen Anlage eine Anforderung von einem Operator des Leitsystems entgegennimmt und in Reaktion auf die Anforderung automatisch eine Kritikalität derjenigen Messwerte, die den technischen Objekten zugeordnet ist, ermittelt und einen zeitlichen Verlauf und/oder eine numerische Anzeige wenigstens des Messwertes, der die höchste Kritikalität aufweist, der grafischen Darstellung hinzufügt.

Bevorzugt nimmt das Leitsystem die Anforderung des Operators durch die Anwahl eines entsprechend visuell dargebotenen Symbols durch den Operator entgegen. Alternativ oder zusätzlich nimmt das Leitsystem die Anforderung des Operators durch eine Spracheingabe durch den Operator entgegen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: eine grafische Darstellung eines Leitsystems gemäß einem ersten Aspekt;,
- FIG 2: die grafische Darstellung des Leitsystems gemäß einem zweiten Aspekt; und
- FIG 3: ein Leitsystem in einer schematischen Darstellung.

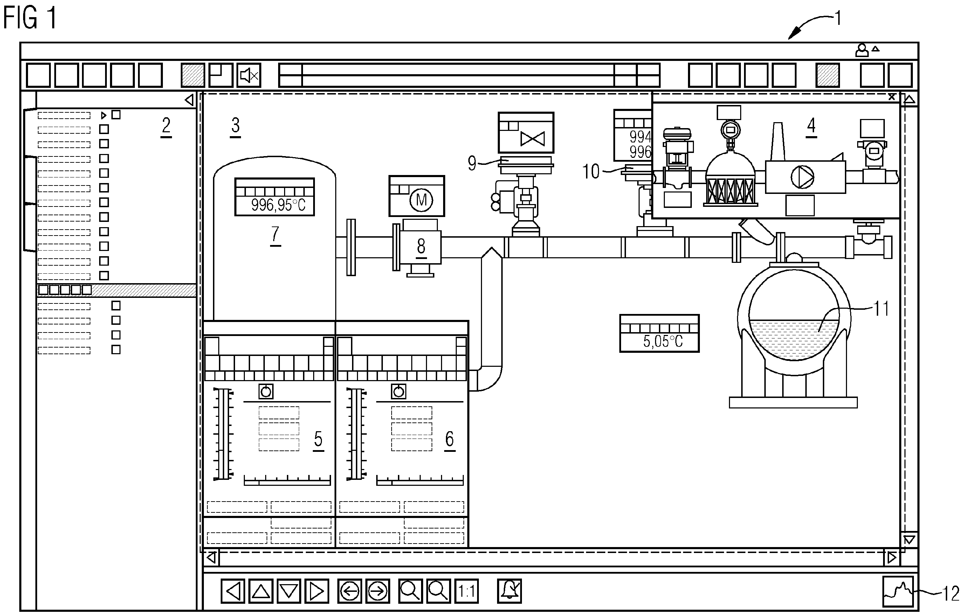

In FIG 1 ist eine grafische Darstellung 1 abgebildet, die von einem Leitsystem im Rahmen eines Bedienens und Beobachtens einer als Prozessanlage ausgebildeten technischen Anlage für einen Operator der technischen Anlage bereitgestellt wird. Die grafische Darstellung 1 umfasst auf der linken Seite von FIG 1 eine Auflistung 2 und auf der rechten Seite von FIG 1 ein Anlagenbild 3 (durch eine gestrichelte Linie gekennzeichnet). In dem Anlagenbild 2 sind eine Ansicht 4 von Prozessobjekten und zwei Bedienschnittstellen 5, 6 enthalten. Zudem sind in dem Anlagenbild 3 verschiedene grafische Repräsentationen 7, 8, 9, 10, 11 von technischen Prozessobjekten (Tank, Heizer, Ventile etc.) der Prozessanlage enthalten. Der Operator kann über die Bedienschnittstellen 5, 6 (sowie weitere, bei Bedarf aktivierbare, in FIG 1 nicht dargestellte, Bedienschnittstellen) aktuelle Werte auslesen und Bedienoperationen wie das Ändern von Sollwerten vornehmen.

Die Auflistung 2 umfasst eine Vielzahl von Referenzen auf Anlagenbilder, die von dem Operator des Leitsystems anwählbar sind, um sie auf der rechten Seite in FIG 1 visuell darzustellen. Die Referenzen weisen beispielhaft die Namen "Display_Tank1", "Display_Overview_SP1" oder "Display_Heater2" auf.

Will der Operator zur Laufzeit der Prozessanlage einen Überblick über den aktuell kritischsten Prozessmesswert derjenigen Prozessobjekte erhalten, die in dem Anlagenbild 3 grafisch repräsentiert sind, so kann er ein Symbol 12 anwählen (Mausklick, Fingerdruck) und dadurch eine entsprechende Anforderung an das Leitsystem richten. Das Symbols 12 ist in Form eines Werteverlaufs ausgebildet.

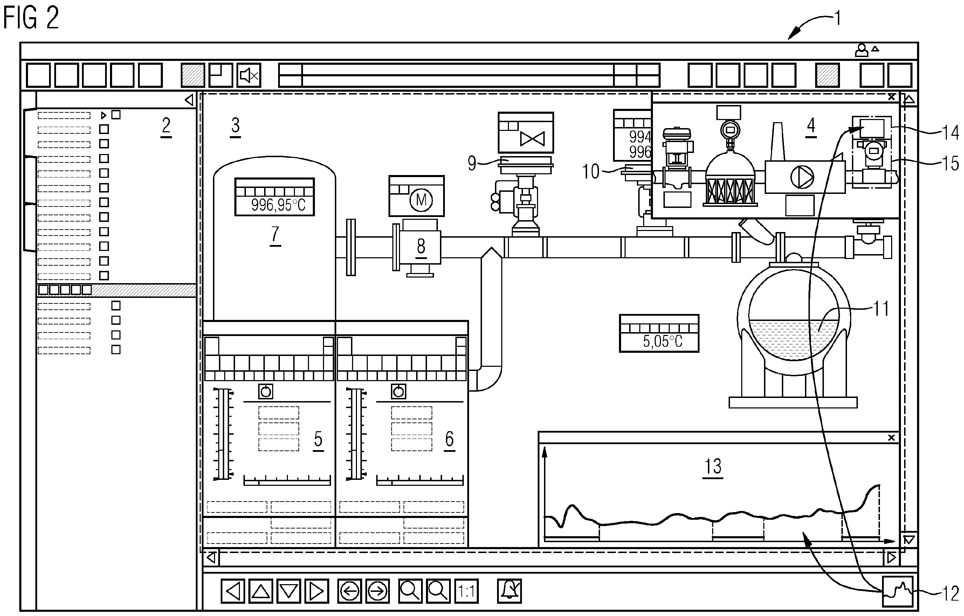

Stellt der Operator die Anforderung an das Leitsystem durch Anwahl des Werteverlauf-Symbols 12, so ermittelt das Leitsystem automatisch eine Kritikalität derjenigen Prozessmesswerte, die den Prozessobjekten des Anlagenbildes 3 zugeordnet sind, und stellt einen zeitlichen Verlauf 13 des Prozessmesswertes, der die höchste Kritikalität aufweist, in der grafischen Darstellung 1 dar (vgl. FIG 2). Zusätzlich stellt das Leitsystem eine numerische Anzeige 14 des aktuellen Prozessmesswertes dar und versieht die dem Prozessmesswert zugeordnete grafische Repräsentation 15 mit einer visuellen Hervorhebung (in FIG 2 durch Punkte verdeutlicht). Hierdurch wird der Operator effizient und eindeutig auf das Prozessobjekt hingewiesen, welches einen kritischen Prozessmesswert aufweist. Zudem erhält der Operator durch die automatische Anzeige des zeitlichen Verlaufs 13 einen unmittelbaren Eindruck, ob der Prozessmesswert tatsächlich als kritisch zu betrachten ist und wie lange diese Kritikalität schon besteht. Hierzu weist der zeitliche Verlauf 13 eine Information (z.B. Farbmarkierung) über eine Zeitspanne auf, während dieser der Prozessmesswert als am kritischsten zu betrachten ist (bzw. war).

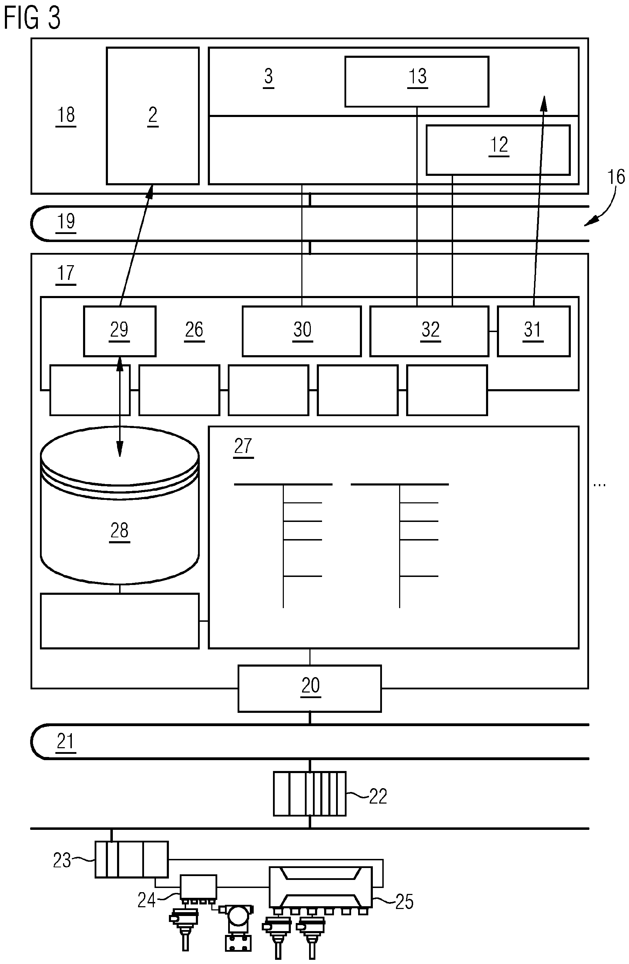

In FIG 3 ist ein Leitsystem 16 für die Bedienung und Beobachtung der als Prozessanlage ausgebildeten technischen Anlage schematisch dargestellt. Das Leitsystem 16 umfasst einen Operator Station Server 17 und einen Operator Station Client 18. Der Operator Station Server 17 und der Operator Station Client 18 sind über einen Terminalbus 19 miteinander und optional mit nicht dargestellten weiteren Komponenten des Leitsystems 16 wie einem Archivserver oder einem Engineering Station Server verbunden.

Ein Benutzer bzw. Operator kann zum Zwecke des Bedienens und Beobachtens über den Operator Station Client 18 mittels des Terminalbus 18 auf den Operator Station Server 17 zugreifen. Analog dazu kann ein Projekteur über einen in FIG 3 nicht dargestellten Engineering Station Client auf den ebenfalsl nicht dargestellten Engineering Station Server zugreifen, um eine Projektierung der Automatisierung für die Prozessanlage zu erstellen. Der Terminalbus 19 kann, ohne sich darauf zu beschränken, beispielsweise als Industrial Ethernet ausgebildet sein.

Der Operator Station Server 17 weist eine Geräteschnittstelle 20 auf, die mit einem Anlagenbus 21 verbunden ist. Über diese Geräteschnittstelle 20 ist der Operator Station Server 17 mit einem Automatisierungsgerät 22 sowie mit weiteren Komponenten der Prozessanlage wie Peripheriegeräten 23, 24, 25 verbunden und kann mit diesen kommunizieren. Der Anlagenbus 21 kann, ohne sich darauf zu beschränken, beispielsweise als Industrial Ethernet ausgebildet sein.

Auf dem Operator Station Server 17 sind (unter anderem) ein Visualisierungsdienst 26, ein Prozessabbild 27 und ein Konfigurationsspeicher 28 implementiert. Der in dem Operator Station Server 17 integrierte Visualisierungsdienst 26 initiiert eine Übertragung von Visualisierungsinformationen an den Operator Station Client 18. Der Operator Station Client 18 ist dazu ausgebildet, eine Visualisierung, d.h. eine grafische Darbietung 1, insbesondere von Anlagenbildern, Messwerteverläufen, Bedienelementen und vergleichbaren Elementen, zum Bedienen und Beobachten der Prozessanlage darzustellen.

In dem Prozessabbild 27 des Operator Station Servers 17 ist eine Momentaufnahme der (Signal-)Zustände von mit dem Operator Station Server 17 verbundenen Geräten und/oder Applikationen hinterlegt. Diese werden im vorliegenden Ausführungsbeispiel von dem Automatisierungsgerät 22 an den Operator Station Server 16 übertragen.

Nach Fertigstellung einer Automatisierung für die Prozessanlage wird diese durch einen Kompilierungsdienst des Engineering Station Servers in ein für das Automatisierungsgerät 22 und den Operator Station Server 17 verständliches Datenformat gebracht und an die beiden Geräte übertragen. Der für die Bedienung und Beobachtung der Prozessanlage vorgesehene Teil der Automatisierungsdaten wird in dem Konfigurationsspeicher 28 des Operator Station Servers 17 hinterlegt.

Ein Auflistungsdienst 29 des Visualisierungsdienstes 26 erzeugt auf Basis der in dem Konfigurationsspeicher 28 hinterlegten Automatisierungsdaten eine Auflistung 2, wie sie anhand der Figuren 1 und 2 verdeutlicht ist. Ein Bedienelementendienst 30 erzeugt auf Basis der in dem Konfigurationsspeicher 28 hinterlegten Automatisierungsdaten unter anderem das in den Figuren 1 und 2 gezeigte Symbol 12 in Form eine Werteverlaufs. Ein Anlagenbilddienst 31 erzeugt auf Basis der in dem Konfigurationsspeicher 28 hinterlegten Automatisierungsdaten und auf Basis der aktuellen Prozessmesswerte aus dem Prozessabbild 27 ein Anlagenbild 3, wie es ebenfalls in den Figuren 1 und 2 verdeutlicht ist.

Wie zuvor bereits erläutert, kann die Erzeugung des Werteverlaufs 13 über das Symbol 12 angestoßen werden. Der dazugehörige Werteverlaufsdienst 32 ermittelt in Kombination mit dem Anlagenbilddienst 31 und dem Prozessabbild 27 den kritischsten Prozessmesswert des aktuell dargestellten Anlagenbildes 3. Hierzu erfragt der Werteverlaufsdienst 32 zunächst beim Anlagenbilddienst 31, welche Prozessobjekte in dem aktuell dargebotenen Anlagenbild 3 enthalten sind und welche Prozessmesswerte zu den Prozessobjekten gehören. Auf Basis dieser Informationen ermittelt der Werteverlaufsdienst 32 dann aus dem Prozessabbild 27, ob für die Prozessobjekte bzw. Prozessmesswerte Alarme vorliegen. Diese Alarme werden nach ihrer Kritikalität sortiert und der kritischste Alarm wird ausgewählt. Kriterien für die Kritikalität können beispielsweise ein Entstehungsdatum des Alarms oder eine Gefahrenklassifizierung des dazugehörigen Prozessobjektes sein. Dem Prozessabbild 27 entnimmt der Werteverlaufsdienst 32 den zeitlichen Verlauf des kritischsten Prozessmesswertes und übermittelt die dazugehörigen Visualisierungsinformationen an den Operator Station Client 18 zur visuellen Darbietung des zeitlichen Verlaufs 13.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Visuelle Darbietung
- 2: Auflistung
- 3: Anlagenbild
- 4: Ansicht von Prozessobjekten
- 5: Bedienschnittstelle
- 6: Bedienschnittstelle
- 7: Digitale Repräsentation eines Prozessobjektes
- 8: Digitale Repräsentation eines Prozessobjektes
- 9: Digitale Repräsentation eines Prozessobjektes
- 10: Digitale Repräsentation eines Prozessobjektes
- 11: Digitale Repräsentation eines Prozessobjektes
- 12: Symbol
- 13: Zeitlicher Verlauf
- 14: Numerische Anzeige
- 15: Grafische Repräsentation
- 16: Leitsystem
- 17: Operator Station Server
- 18: Operator Station Client
- 19: Terminalbus
- 20: Geräteschnittstelle
- 21: Anlagenbus
- 22: Automatisierungsgerät
- 23: Prozesskomponente
- 24: Prozesskomponente
- 25: Prozesskomponente
- 26: Visualisierungsdienst
- 27: Prozessabbild
- 28: Konfigurationsspeicher
- 29: Auflistungsdienst
- 30: Bedienelementendienst
- 31: Anlagenbilddienst
- 32: Werteverlaufsdienst

## Patentansprüche

1. Leitsystem (16) für eine technische Anlage, insbesondere Fertigungs- oder Prozessanlage, das dazu ausgebildet ist, eine grafische Darstellung (1) von digitalen Repräsentationen (7, 8, 9, 10, 11) einer Mehrzahl von technischen Objekten der technischen Anlage zur Bedienung und Beobachtung der technischen Anlage zu erzeugen,
**dadurch gekennzeichnet, dass**
das Leitsystem (16) dazu ausgebildet ist, zur Laufzeit der technischen Anlage eine Anforderung von einem Operator des Leitsystems (16) entgegenzunehmen und in Reaktion auf die Anforderung automatisch eine Kritikalität derjenigen Messwerte, die den technischen Objekten zugeordnet ist, zu ermitteln und einen zeitlichen Verlauf (13) und/oder eine numerische Anzeige (14) wenigstens des Messwertes, der die höchste Kritikalität aufweist, der grafischen Darstellung (1) hinzuzufügen.

2. Leitsystem (16) nach Anspruch 1, bei dem die grafische Darstellung (1) eine Auflistung (2) von Referenzen auf Anlagenbilder (3) der technischen Anlage umfasst.

3. Leitsystem (16) nach Anspruch 1 oder 2, bei dem die grafische Darstellung (1) ein Anlagenbild (3) der technischen Anlage umfasst.

4. Leitsystem (16) nach einem der vorangegangenen Ansprüche, bei dem die grafische Darstellung (1) eine Meldeanzeige umfasst, welche wenigstens eine Meldung der technischen Anlage umfasst.

5. Leitsystem (16) nach einem der vorangegangenen Ansprüche, bei dem die grafische Darstellung (1) gemäß einem Sequential Flow Chart (SFC) aufgebaute Schrittketten umfasst.

6. Leitsystem (16) nach einem der vorangegangenen Ansprüche, das dazu ausgebildet ist, die Anforderung des Operators durch die Anwahl eines entsprechend visuell dargebotenen Symbols (12) durch den Operator entgegenzunehmen.

7. Leitsystem (16) nach einem der vorangegangenen Ansprüche, das dazu ausgebildet ist, die Anforderung des Operators durch eine durch den Operator getätigte Spracheingabe entgegenzunehmen.

8. Leitsystem (16) nach einem der vorangegangenen Ansprüche, das dazu ausgebildet ist, die dem Messwert, der die höchste Kritikalität aufweist, zugeordnete grafische Repräsentation (15) visuell hervorzuheben, insbesondere durch eine Änderung eines Kontrastes oder einer Farbgebung, oder durch ein Hinzufügen eines Rahmens um die grafische Repräsentation (15), vorzugsweise eines Rahmens mit einer zeitlich wechselnden Helligkeit oder Farbe.

9. Leitsystem (16) nach Anspruch 8, das dazu ausgebildet ist, die grafische Repräsentation (15) für den Fall, dass sie vor der Anforderung durch den Operator von einer anderen grafischen Repräsentation (7, 8, 9, 10, 11) überdeckt und damit für den Operator nicht sichtbar war, für den Operator sichtbar zu machen.

10. Leitsystem (16) nach einem der vorangegangenen Ansprüche, das dazu ausgebildet ist, die Kritikalität des Messwertes anhand einer Alarmmeldung zu ermitteln, welche das technische Objekt betrifft, zu dem der Messwert zugeordnet ist.

11. Leitsystem (16) nach einem der vorangegangenen Ansprüche, das dazu ausgebildet ist, die Kritikalität des Messwertes anhand von Eingaben zu ermitteln, die ein weiterer Operator zuvor in dem Leitsystem (16) getätigt hat.

12. Leitsystem (16) nach einem der vorangegangenen Ansprüche, das dazu ausgebildet ist, die Kritikalität des Messwertes anhand einer Vorhersage zu ermitteln, welche auf ein zeitnahes Über- oder Unterschreiten eines Schwellwertes des Messwertes hinweist.

13. Verfahren zum Betrieb einer technischen Anlage, insbesondere Fertigungs- oder Prozessanlage, mit einem Leitsystem (16),
welches eine grafische Darstellung (1) von digitalen Repräsentationen (7, 8, 9, 10, 11) einer Mehrzahl von technischen Objekten der technischen Anlage zur Bedienung und Beobachtung der technischen Anlage erzeugt,
und welches zur Laufzeit der technischen Anlage eine Anforderung von einem Operator des Leitsystems (16) entgegennimmt und in Reaktion auf die Anforderung automatisch eine Kritikalität derjenigen Messwerte, die den technischen Objekten zugeordnet ist, ermittelt und einen zeitlichen Verlauf (13) und/oder eine numerische Anzeige (14) wenigstens des Messwertes, der die höchste Kritikalität aufweist, der grafischen Darstellung (1) hinzufügt.

14. Verfahren nach Anspruch 13, bei dem das Leitsystem (16) die Anforderung des Operators durch die Anwahl eines entsprechend visuell dargebotenen Symbols (12) durch den Operator entgegennimmt.

15. Verfahren nach Anspruch 13 oder 14, bei dem das Leitsystem (16) die Anforderung des Operators durch eine Spracheingabe des Operators entgegennimmt.
